(19) Europäisches Patentamt European Patent Office Office européen des brevets

(11) **EP 4 679 676 A1**

(12) **EUROPEAN PATENT APPLICATION**
published in accordance with Art. 153(4) EPC

(43) Date of publication:
**14.01.2026 Bulletin 2026/03**

(21) Application number: **24766875.9**

(22) Date of filing: **21.02.2024**

(51) International Patent Classification (IPC):
*H02J 50/80* (2016.01)    *B60L 5/00* (2006.01)
*B60L 53/122* (2019.01)    *B60L 53/126* (2019.01)
*B60M 7/00* (2006.01)    *H02J 50/12* (2016.01)
*H02J 50/40* (2016.01)

(52) Cooperative Patent Classification (CPC):
**B60L 5/00; B60L 53/122; B60L 53/126; B60M 7/00; H02J 50/12; H02J 50/40; H02J 50/80**

(86) International application number:
**PCT/JP2024/006203**

(87) International publication number:
**WO 2024/185504 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.03.2023 JP 2023033500**

(71) Applicant: **DENSO CORPORATION Kariya-city, Aichi 448-8661 (JP)**

(72) Inventors:
• **TAKAHASHI, Masaya**
  **Kariya-city, Aichi 448-8661 (JP)**
• **NAKAYASHIKI, Yusei**
  **Kariya-city, Aichi 448-8661 (JP)**
• **KANESAKI, Masaki**
  **Kariya-city, Aichi 448-8661 (JP)**
• **YAMAGUCHI, Nobuhisa**
  **Kariya-city, Aichi 448-8661 (JP)**

(74) Representative: **TBK**
  **Bavariaring 4-6**
  **80336 München (DE)**

(54) **NON-CONTACT POWER SUPPLY SYSTEM, NON-CONTACT POWER TRANSMISSION DEVICE, NON-CONTACT POWER RECEPTION DEVICE, AND METHODS FOR SAME**

(57)    In order to enhance safety of contactless power supply, a reception apparatus (30) outputs a transmission request signal that requests a power transmission, and a transmission apparatus (50) that receives the transmission request, performs a power transmission using magnetic coupling to the reception apparatus for a predetermined transmission period. After the transmission period ends, the transmission apparatus changes the state to be a transmission state of which a transmission quantity is lower than that in the transmission period. Such a transmission state is a state where the power transmission is cutoff, or a state where the power transmission is performed with a transmission quantity lower than that of the transmission period.

FIG.8

## Description

[Cross-Reference of Related Applications]

The present application is based on Japanese Application No. 2023-033500 filed on March 6, 2023, and claims the benefit of its priority, with the entire contents of the patent application incorporated herein by reference.

[Technical Field]

The present disclosure relates to a contactless power supply.

[Description of the Related Art]

According to a contactless power supply system, in order to simplify the system configuration thereof, a configuration may be adopted in which a transmission apparatus and a reception apparatus exchange signals via an electromagnetic coupling for supplying power. For example, according to a patent literature, that is, an internal publication No. WO2020/183819, in the case where the reception apparatus side requires to stop the power supply operation of the transmission apparatus, the impedance of the reception circuit of the reception apparatus is controlled to change a magnitude of current or the like supplied from the DC power source in the transmission apparatus side, and a transmission stop signal is demodulated from this change, thereby stopping operation of the inverter in the transmission apparatus.

However, according to such a method of controlling the impedance of the reception circuit, since it is likely to be influenced by the location of the reception coil of the reception apparatus relative to the transmission coil of the transmission apparatus or the characteristics of a capacitor and a coil that constitute the resonant circuit for the power supply operation or the characteristics of the filter circuit, the transmission stop signal may not be demodulated. Moreover, in the case where a power stop request is not correctly transmitted to the transmission apparatus side from the reception apparatus side, the transmission apparatus continues to perform the power supply operation. Hence, in the case where any fault has occurred in the reception apparatus, issues may deteriorate.

[Summary of the Invention]

The present disclosure can be embodied as the following embodiments or other applicable examples.

According to a first aspect of the present disclosure, a contactless power supply system supplying power to a reception apparatus from a transmission apparatus using magnetic coupling. According to the contactless power supply system, the reception apparatus outputs a transmission request signal that requests a power transmission, the transmission apparatus, when receiving the transmission request signal, performs a power transmission using the magnetic coupling to the reception apparatus for a predetermined transmission period, and thereafter changes a state thereof to be a standby state wherein a power transmission quantity is smaller than that of the transmission period. With this contactless power supply system, undesirable power transmission can be prevented or avoided from being continued.

According to a second aspect of the present disclosure, a power transmission apparatus that performs power transmission to a reception apparatus using magnetic coupling is provided. The power transmission apparatus, when receiving a transmission request signal from the reception apparatus, performs a first transmission to the reception apparatus using the magnetic coupling in a predetermined transmission period, and changes, after the transmission period ends, a state to be a transmission state of which a power-transmission quantity is lower than that of the first transmission. The transmission apparatus, when receiving the transmission request signal, performs the first transmission for a predetermined period, and then changes the state to be a standby state of which a power-transmission quantity is lower than that of the first transmission. Hence, undesirable power transmission can be prevented from being continued.

According to a third aspect of the present disclosure, a power reception apparatus that receives power transmitted from a transmission apparatus using magnetic coupling is provided. The power reception apparatus transmits a transmission request signal that requests a power transmission to the transmission apparatus, the transmission apparatus which receives the transmission request signal performs a first transmission to the contactless power reception apparatus using the magnetic coupling in the predetermined transmission period, and after the transmission period ends, a state is changed to be a transmission state of which a transmission quantity is lower than that of the first transmission, and the transmission request signal is again outputted when a predetermined condition is satisfied. Accordingly, undesirable power reception can be prevented or avoided from being continued. Further, when a predetermined condition is satisfied, since the power reception apparatus outputs the transmission request signal again, the power reception can be continued when reasons for interrupting the power rection is not present.

According to a fourth aspect of the present disclosure, a method for performing contactless power supply from a transmission apparatus to a reception apparatus using magnetic coupling is provided. The method includes steps of: outputting, by the reception apparatus, a transmission request signal that requests a power transmission; performing, by the transmission apparatus when receiving the transmission request signal, a power transmission to the reception apparatus using the magnetic coupling for a predetermined transmission period; and changing, by the transmission apparatus after the transmission period ends, a state to be a transmission state of which a transmission quantity is lower than that in the transmission period. According to the method performing contactless power supply, undesirable power transmission can be prevented or avoided from being continued.

[Brief Description of the Drawings]

The above-described objects and other objects, features and advantages of the present disclosure will be clarified further by the following detailed description with reference to the accompanying drawings. The drawings are:

Fig.1 is a diagram showing an overall configuration of a contactless power supply system of an embodiment;

Fig.2 is a diagram showing an overall configuration of a transmission apparatus and a reception apparatus that constitute the contactless power supply system;

Fig.3 is a graph showing an example of a standby current and a resonance current in the transmission circuit of the transmission apparatus;

Fig.4 is a diagram showing a relationship between a positional relationship between the reception coil and the transmission coil, and a current flowing through the transmission coil;

Fig.5 is a flowchart showing an overall processes executed by a reception side and a transmission side, comparing the processes therebetween;

Fig.6 is a diagram showing a configuration example of a transmission circuit including a changing unit of the transmission apparatus;

Fig.7 is a diagram showing an example of a circuit configuration of the reception apparatus;

Fig.8 is a timing diagram showing operation of the reception apparatus and the transmission apparatus;

Fig.9 is a diagram showing a configuration example of a reception apparatus side according to a second example;

Fig.10 is a flowchart showing an example of a process in the reception apparatus side according to the second embodiment;

Fig.11 is a flowchart showing an example of a process in the transmission apparatus side according to the second embodiment;

Fig.12 is a diagram showing an overall configuration of a transmission apparatus and a reception apparatus that constitute a contactless power supply system according to a third embodiment;

Fig.13 is a flowchart showing an example of a transmission side processing routine as a first modification example;

Fig.14 is a flowchart showing an example of a transmission side processing routine as a second modification example; and

Fig.15 is a flowchart showing an example of a transmission side processing routine as a third modification example.

[Description of Embodiments]

A. First Embodiment

(A1) Overall configuration of contactless power supply system

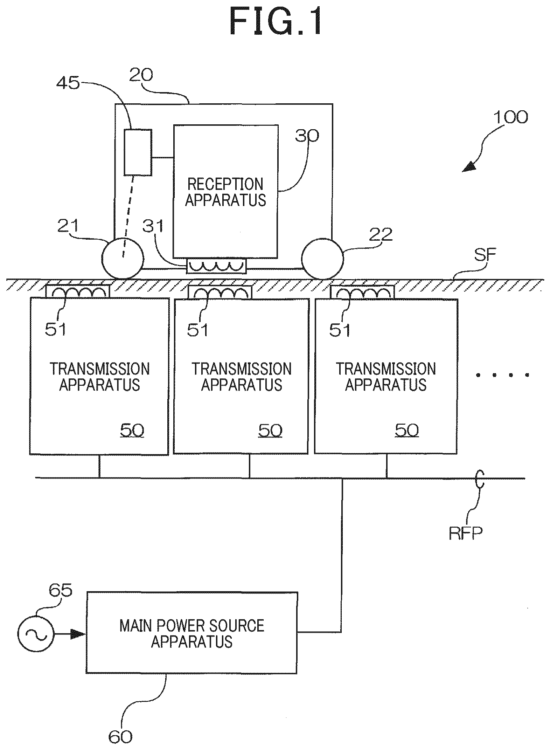

An overall configuration of a contactless power supply system provided with a transmission apparatus 50 and a reception apparatus according to the first embodiment is shown in Fig.1. As shown in Fig.1, the contactless power supply system 100 is configured of a plurality of transmission apparatuses 50 buried in the ground under the road surface SF and a reception apparatus 30 mounted on a mobile body 20 self-travelling on the road surface SF. The mobile body 20 is provided with driving wheels 21 driven by a motor (not shown) included in the load apparatus 45, driven wheels 22 that support the mobile body 20 together with the driving wheels 21 to be movable on the road surface 20, a reception coil 31 disposed under the floor of the mobile body 20, and the like. The reception coil 31 is magnetically coupled with the transmission coil 51 of the transmission apparatuses 50 provided in the road surface SF side so as to be supplied with AC power, and supplies power to the load apparatus 45. The transmission apparatuses 50 and the contactless power supply system 100 including the transmission apparatuses 50 are not limited to one that supplies power to the reception apparatus 30 of the mobile body 20. As long as a system performing a power transmission in contactless manner and supplying power is utilized, the reception apparatus may be an apparatus or a system that transmits or supplies power to an apparatus such as a portable terminal which is not a mobile body. The mobile body 20 is not limited to one traveling on an outdoor road, but may include a carrier vehicle for indoor use such as a factory or a hospital. The number of wheels of the mobile body 20 is not limited, but may be one capable of travelling in a magnetic levitating manner for example.

The transmission apparatuses 50 may be disposed on a road surface or a wall surface or a ceiling, other than the configuration of disposing under the road surface SF. In this case, the reception apparatus 30 may be disposed at a prescribed position within the mobile body 20, corresponding to an installation position of the transmission apparatuses 50. For example, when the transmission apparatuses 50 are disposed on the wall surface, the reception apparatus 30 may be disposed on the side surface of the mobile body 20. Also, a position of the reception apparatus 30 may be changed within the mobile body 20 corresponding to an installation position of the transmission apparatuses 50, or a plurality of reception apparatuses 30 may be prepared in advance and any one of the reception apparatuses 30 may be selected for use.

For a plurality of transmission apparatuses 50 that supplies power to the reception apparatus 30 of the mobile body 20, according to the present embodiment, they are configured having the same configuration and arranged along a traveling route of the mobile body 20. The transmission apparatuses 50 are not limited to the arrangement on the traveling road of the mobile body 20, but may be two-dimensionally arranged on the road surface SF. The respective transmission apparatuses 50 are connected to a common main power line RFP. For the main power line RFP, AC power of which the frequency is f1 as a high frequency (e.g. 85 KHz) is supplied from the main power source apparatus 60. According to the present embodiment, the respective transmission apparatuses 50 have the same configuration. However, as long as the power transmission is possible, the configuration is not necessary the same such that transmission coils 51 of which the sizes are different may be alternately arranged. Moreover, only one transmission apparatus 50 may be provided.

The main power source apparatus 60 receives a low frequency (e.g. 60Hz) AC power supplied from the main power source 65 and converts the received AC power to high frequency AC power. For the main power source apparatus 60, a configuration is known in which a noise filter for AC output, a PFC circuit, an inverter and a filter are provided in this order from a power-reception side where the power is received from the main power source 65. The power supplied from the main power source 65 is converted into the above-described AC power having desired frequency and outputted to the main power line RFP.

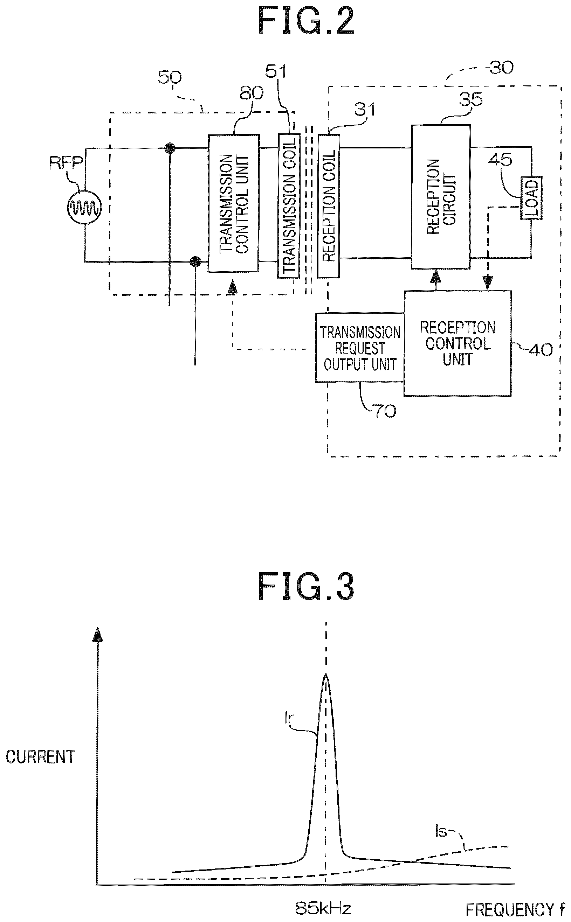

An overall configuration of the transmission apparatus 50 and the reception apparatus 30 are shown in Fig.2. Fig.2 shows a state where one of the plurality of transmission apparatuses 50 transmits power to the reception apparatus 30 of the mobile body 20. At this moment, the transmission coil 51 of the transmission apparatus 50 magnetically couples with the reception coil 31 of the reception apparatus 30, and an inductive current (alternating current) flows through the reception coil 31. The reception apparatus 30 is provided with a reception circuit 35 that receives power using the reception coil 31, a load apparatus 45 that operates using the received power, a reception control unit 40 composed of a CPU and a memory device, and a transmission request output unit 70 that outputs a transmission request in response to a command transmitted from the reception control unit 40. The reception circuit 35 is provided with a reception circuit and a rectifier circuit such that the reception coil 31 receives power from the transmission coil 51 with the magnetic coupling therebetween and supplies DC power to the load apparatus 45. These circuit configurations will be described later in more detail. Note that the reception circuit refers to a circuit connected to the reception coil 31, however, various circuit elements such as a current sensor may be connected to the reception circuit. Hence, the reception circuit in a broad sense refers to a closed circuit through which current flows in response to a reception of the power received by the reception coil 31. The load apparatus 45 includes devices using a main power used in the mobile body such as a mobile motor of the mobile body 20, according to the present example. However, the load apparatus 45 may include a battery that temporarily stores power.

The transmission apparatus 50 that transmits power to the reception apparatus 30 is provided with, other than the transmission coil 51, a transmission control unit 80 that controls a transmission current. The transmission control unit 80 is provided with a CPU and a memory unit, and executes programs required for processes of the transmission side, thereby performing control operations for entire transmission apparatus 50 including a detection of a transmission request to require a start of the transmission. The transmission control unit 80, when receiving the transmission request from the reception apparatus 30, performs power-transmission to the reception apparatus 30 using the magnetic coupling for a predetermined transmission period, and thereafter changes the state to be a standby state in which the power transmission quantity is smaller than that of the transmission period.

For outputting the transmission request from the reception apparatus 30 and detecting the transmission request by the transmission apparatus 50, various methods can be adopted. For example, the transmission request output unit 70 of the reception apparatus 30 may be configured as a transmitter that performs short-range wireless communication such as Bluetooth (registered trade mark), and the transmission control unit 80 may be configured as a receiver that detects a wireless communication signal transmitted from the transmission request output unit 70, whereby the transmission request can readily be transmitted and received. Alternatively, short-range wireless communication such as RFID or wireless communication such as WiFi may be utilized. Further, optical communication may be utilized for communication. Such communication is not limited to use of a contactless manner technique but may utilize wired communication in which a contactor of the reception apparatus 30 side may contact with a contact-terminal provided in the transmission apparatus 50 side to perform wired communication. Moreover, the transmission request may be transmitted using magnetic coupling between the reception coil 31 and the transmission coil 51. In this case, strength of the magnetic coupling may be changed using a coil other than the reception coil 31 to change a magnitude of current flowing through the transmission coil 51, thereby producing the transmission request. Alternatively, an AC voltage of which the frequency f2 is different from the frequency f1 of the AC voltage used for the power-transmission may be applied to the reception coil 31 and the frequency f2 is demodulated, thereby producing the transmission request.

When receiving the transmission request from the reception apparatus 30, the transmission control unit 80 performs power-transmission for a predetermined transmission period using the magnetic coupling to the reception apparatus 30. Thereafter, the state is changed to be a standby state in which the power transmission quantity is smaller than the power transmission quantity during the predetermined transmission period. Note that various circuit configurations may be adopted for the transmission control unit 80 as long as the above-mentioned operations can be performed. For example, a changing unit may be provided for changing the impedance of the closed circuit including the transmission coil 51, the impedance of the closed circuit is set to be smaller once the transmission request from the reception apparatus 30 is received, and the power-transmission is performed. After a predetermined transmission period is elapsed, the impedance may be set to be larger than that in the transmission period to change the state to be the standby state. The impedance may be changed using the resistor inserted into the closed circuit or a capacitance of the capacitor inserted into the closed circuit may be changed considering that the current flowing through the closed circuit is AC current. Moreover, an inductance of the transmission coil 51 may be changed. These changes can readily be accomplished such that a connection is switched to any one of capacitances having different capacitances or a connection is switched to any one of taps having different number of winding-turns provided in the transmission coil 51. Furthermore, a component of which the capacitance or the inductance is variable, such as a variable capacitor, may be utilized.

According to the present embodiment, the transmission coil 51 and the transmission control unit 80 constitute a primary side resonant circuit. When performing the power transmission, the impedance of the closed circuit including the transmission coil 51 is changed to cause a resonant state in which the resonant frequency of the circuit is the same as or close to or the frequency f1 of the main power line RFP. When the power transmission is not performed, that is, in the standby state, the resonant frequency of the circuit is changed to be out of the frequency f1. As a result, the resonant current Ir flowing through the transmission coil 51 in the resonant state becomes significantly larger than a standby current Is flowing through the transmission coil 51 in the standby state. Fig.3 illustrates the above-described state. In Fig.3, a relationship between the frequency and the current flowing through the transmission coil 51 in a state where the impedance of the transmission circuit is set causing the resonant frequency f1 (here, 85KHz) is indicated as Ir, and a relationship between the frequency and the current flowing through the transmission coil 51 in a state where the resonant frequency of the circuit is different from f1 (here, frequency higher than f1) is indicated as Is. Since a voltage of the main power line RFP of which the frequency is 85KHz is applied to the transmission circuit, the current Is flowing through the transmission coil 51 in the standby state is significantly smaller than the current Ir flowing through the transmission coil 51 in the resonant state. Here, the transmission circuit refers to a circuit composed of the transmission coil 51 and the transmission control unit 80. However, various circuit components such as a current sensor may be connected to the transmission circuit. Hence, the transmission circuit in a broad sense refers to a closed circuit where a current to be transmitted using the transmission coil 51 flows.

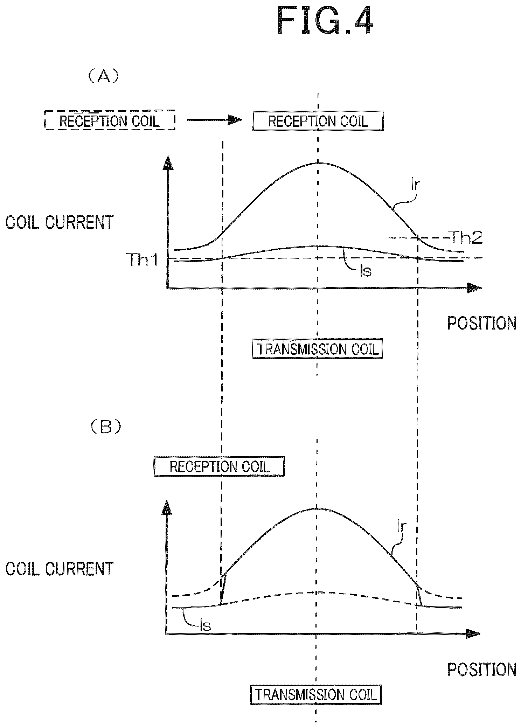

With reference to Fig.4, a principle of power transmission using such an impedance-change technique, capable of transmitting a large amount of power during power transmission with a small standby current, will be described. Fig.4 illustrates a change in the current flowing through the transmission coil 51 depending on the position of the reception coil 31 with respect to the transmission coil 51. According to this example, the transmission circuit constitutes an LC series resonant circuit. Also, a parallel resonant circuit may be utilized in which the characteristics thereof indicate inverted characteristics of that shown in Fig.4. In the case where a LC series-resonant circuit is utilized, even when the standby current Is flows through the transmission coil 51 because the impedance of the transmission circuit is high, or the resonant current Ir larger than the standby current Is flows through the transmission coil 51 because the impedance of the transmission circuit is low, a case where the center position of the reception coil 31 overlaps the center position of the transmission coil 51 causes the largest current value and a case where the position of the reception coil 31 is shifted from the center position of the transmission coil 51 causes a smaller current value. Such a state is illustrated in the upper part (A) of Fig.4.

These characteristics are utilized to perform the following control. That is, a standby state is defined as a default state in which the impedance of the transmission circuit is high, and the impedance of the transmission circuit is set to be lowered when the standby current Is flowing in the standby state exceeds a predetermined determination threshold Th1, thereby causing the transmission circuit to be in a resonant state. In this state, the resonant current Ir flows through both coils and power transmission having a large power can be accomplished. Further, in the case where the position of the reception coil 31 is shifted from the center position of the transmission coil 51, the resonant current Ir is compared with a predetermined OFF determination threshold Th2, sets the impedance of the transmission circuit to be high when the resonant current Ir is below the threshold Th2, and the state is changed to be the standby state. Thus, the power consumption in the standby state in which the reception coil 31 is not present can be reduced. This state is shown in the lower part (B) of Fig.4.

(A2) Contactless power supply process

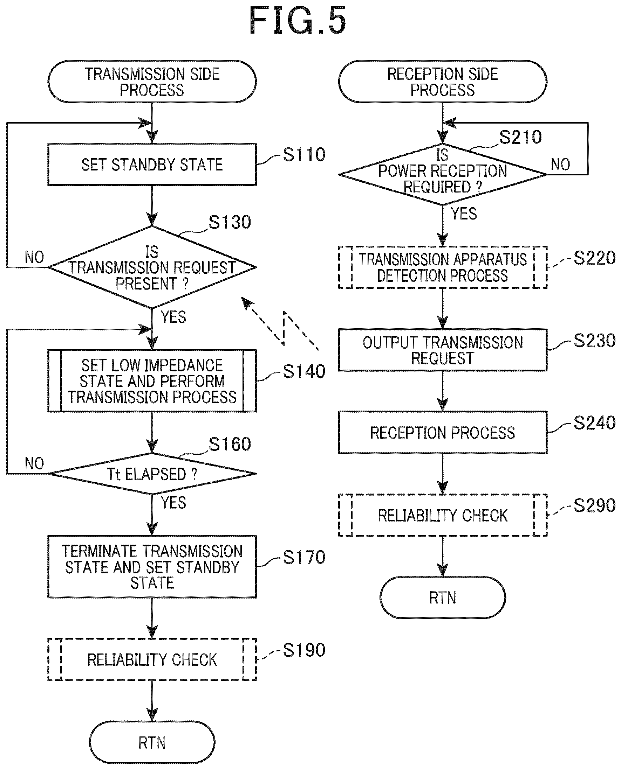

Assuming that the above-described impedance change process is utilized, the transmission apparatus 50 and the reception apparatus 30 execute a power supply process shown in Fig.5. Fig.5 illustrates processes executed in the transmission apparatus 50 side (left side) and processes executed in the reception apparatus 30 side (right side) which correspond to configurations shown in Fig.2. The processes shown in Fig.5 are repeatedly executed by the transmission control unit 80 or the reception control unit 40 in response to an activation of the transmission apparatus 50 or the reception apparatus 30.

When the transmission apparatus 50 is activated, the transmission control unit 80 sets the reception circuit to be in the standby state (step S110). Specifically, as described above, the impedance of the circuit is set to be higher to produce a state where the standby current Is flows through the circuit. With this state, the transmission control unit 80 determines whether a transmission request is outputted from the reception apparatus 30 (step S130), and repeatedly executes processes of S110 and S130 until the transmission request is received. In the case where the transmission request is not present, the control may temporally terminate the present routine, and may execute these processes again from step S110 at predetermined intervals.

The command of the transmission request to the transmission apparatus 50 is outputted by the reception apparatus 30 side. Once the reception apparatus 30 is activated, the reception control unit 40 repeatedly executes the reception side process shown in the drawings. Once the reception side process starts, firstly, the reception control unit 40 determines whether a power-reception is required (step S210). The determination whether the power-reception is required, is made depending on whether a requirement from the load is present. The determination whether a requirement from the load is present, can be made depending on whether the SOC of the battery is below a predetermined threshold when the battery is used as a power source for supplying power to the load apparatus 45 such as a driving motor. When the SOC is below the threshold, it is determined that the power-reception is necessary. Moreover, regardless of presence or absence of the battery, determination whether the power-reception is required, may be made whether the load apparatus 45 requires the power. When the power-reception is not required (step S210: NO), this process step may be repeatedly executed or the present routine may be temporarily terminated and restart the process from step S210 at predetermined intervals.

When determined that the power-reception is necessary (step S210: YES), the control outputs a command of the transmission request (step S230). At this moment, a process for detecting whether the transmission apparatus 50 is present (step S220) may be executed in advance, or the transmission request may be outputted without detecting whether the transmission apparatus 50 is present. The detection of the transmission apparatus 50 is defined as a detection whether the transmission coil 51 of the transmission apparatus 50 is present in the vicinity of the reception coil 31. As shown in Fig.4, when the reception coil 31 and the transmission coil 51 are closely positioned with each other, since the current increases even it is in the standby state, the existence of the transmission apparatus 50 may be detected with such an increase in the current or may be detected through short-range wireless communication such as Bluetooth (registered trade mark) and RFID. Note that the transmission apparatus 50 is not necessarily detected. This is because, as long as the transmission apparatus 50 is present within an area where the reception apparatus 30 is capable of receiving power in response to the transmission request from the reception apparatus 30, the transmission apparatus 50 executes the processes described below, and if the transmission apparatus 50 is not present in the vicinity of the reception coil 31, there is no response to the transmission request. In the case where presence of the transmission apparatus 50 is detected, an operation of the transmission apparatus 50 performed in response to the transmission request is determined, whereby the reliability of the operation of the contactless power supply system 100 can be verified.

A transmission request may be outputted from the reception apparatus 30 side via any communication means, for example. At this time, when the transmission apparatus 50 is present in the vicinity of the reception apparatus 30 which outputted the transmission request, the transmission apparatus 50 determines that the transmission request is present (step S130: YES). Specifically, the impedance of the transmission circuit is set to be lowered and performs a power-transmission process (step S140). Subsequently, this power-transmission process is repeatedly executed (step S140) until a time Tt elapses (step S160). When the time Tt elapses, the power-transmission is terminated and the impedance of the reception circuit is set to be higher, and the state is changed to be the standby state (step S170). Here, the elapsed time Tt can readily be detected using a real time clock and the like. Alternatively, a total amount of power as a total amount of power-transmission using the transmission coil 51 is counted, and the control terminates the power-transmission at earlier time between a time when the time Tt elapses and a time when the total amount of power reaches a predetermined value.

During a period in which the transmission apparatus 50 side is executing such the power-transmission process, the reception process (step S240) is executed in the reception apparatus 30 side. The reception process may be executed for a period corresponding to the time Tt required for the transmission process in the transmission apparatus 50, or may be executed until the current corresponding to the reception power becomes below the predetermined value. Assuming that the reception coil 31 is positioned to face the transmission coil 51 in that period, since the power-transmission process in the transmission apparatus 50 side will be completed when the time Tt is elapsed, the reception process does not continue to be executed any longer. Note that the power transmission may be accomplished using mere electromagnetic induction or may be accomplished using a resonant operation therebetween such that the resonant frequency of the transmission circuit or the reception circuit is set corresponding to the frequency of power to be supplied to the major power line RFP, as long as the power transmission from the transmission coil 51 to the reception coil 31 is accomplished using magnetic coupling between both coils.

In the transmission apparatus 50 side, after completing the power-transmission process, a reliability check process for the transmission side circuit (step S190) may or may not be performed. Alternatively, a predetermined number of transmission processes and a predetermined accumulated transmission period may be set in advance, and when conditions of the number of transmission process or the predetermined accumulated transmission period is met, the reliability check process may be triggered with them to execute the process. Moreover, it is effective that, in the case where any event is detected by a sensor or the like such as when a temperature sensor provided in the transmission circuit detects an increase in the temperature exceeding a predetermined temperature range, the reliability check process may be triggered with them to execute the process. Alternatively, the reliability check process may be performed with such triggers combined. Similarly, in the reception apparatus 30 side, the reliability check process for the reception circuit may be performed after completing the reception process (step S240). The reliability check process may or may not be performed.

The reliability check process may be performed, similar to the above-described determination in the transmission apparatus side, with any one of triggers or a trigger in which any of triggers are combined.

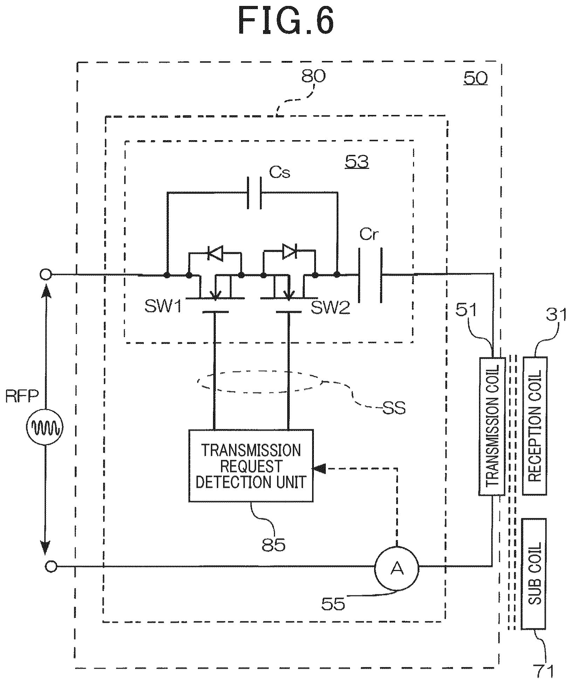

For the transmission apparatus 50 and the reception apparatus 30 which perform corresponding processes, specific circuit configuration examples will be described. The transmission apparatus 50 is provided with, as described above, the transmission coil 51 and the transmission control unit 80 to form a primary side resonant circuit. The transmission control unit 80 is provided with, as shown in Fig.6, a changing unit 53 that changes the impedance, a detection unit 55 that detects a magnitude of current flowing through the transmission coil 51 and a transmission request detection unit 85 that detects the transmission request. The changing unit 53 is provided with two series-connected capacitors Cs and Cr, and a switch SW connected in parallel to the capacitor Cs. The switch SW is provided with two series-connected switching elements SW1 and SW2 and diodes D1 and D2 connected in parallel to the respective switching elements SW1 and SW2. Note that signal lines from the transmission request detection unit 85 are connected to the gates of the switching elements SW1 and SW2.

According to the changing unit 53 having the above-mentioned circuit configuration, since the switch SW is at an OFF state (non-conductive state) when a start signal SS from the transmission request detection unit 85 indicates an OFF state (inactive), Cts of the changing unit 53 as a whole is expressed as:

$$Cts = 1/(1/Cs + 1/Cr).$$

On the other hand, when the start signal SS from the transmission request detection unit 85 indicates an ON state (active), respective two switching elements SW1 and SW2 are in a state in which a current is capable of flowing in one direction, and when AC voltage is applied, with the diodes D1 and D2 connected in parallel, the respective two switching elements SW1 and SW are in a state in which current flows in both directions, that is, a conductive state. Hence, in the case where the start signal SS is at an ON state, no influence from the capacitor Cs is present, and Ct of the changing unit 53 as a whole is expressed as:

$$Ctr = Cr.$$

Specifically, the changing unit 53 changes the capacitance of the resonant capacitor connected to the transmission coil 51, thereby serving as a changing unit that changes the impedance of the circuit where the current flows through the transmission coil 51, depending on the frequency of the AC voltage being applied via the main power line RFP. Since the one connected in series by the switch SW is a capacitor, a relationship between magnitudes of the capacitances Ctr and Cts is expressed as:

$$Ctr > Cts.$$

According to the present embodiment, the capacitance Ctr when the start signal SS indicates ON together with the reactance Lr of the transmission coil 51 are set such that the resonant frequency fr of the resonant circuit is the frequency 85KHz of the main power line RFP. On the other hand, the capacitance Cts when the start signal SS is at OFF, the resonant frequency fr of the resonant circuit is caused to be significantly deviated from 85KHz. In this case, resonance does not occur, but since the impedance of the circuit is not infinite, a constant amount of AC current flows. This is a standby current Is. A current when the resonance occurs due to an On state of the start signal SS is a resonant current Ir. An example of the standby current Is and the resonant current Ir is shown in Fig.3. In either case, a magnitude of current is detected by the detection unit 55.

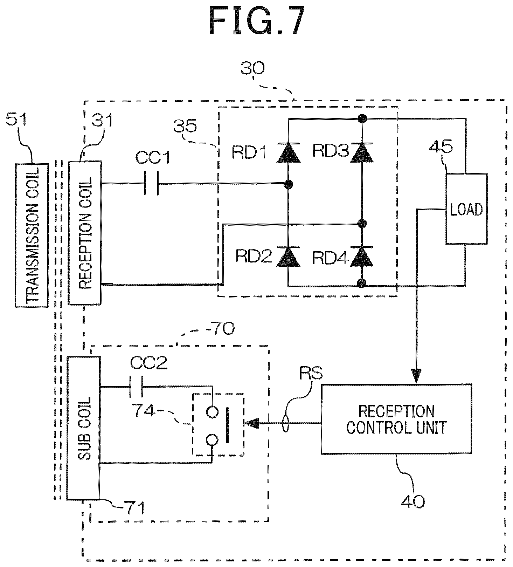

Hereinafter, operations of the transmission request detection unit 85 in the transmission control unit 80 together with the configuration of the reception apparatus 30 will be described. An example of the configuration of the reception apparatus 30 is shown in Fig.7. The reception apparatus 30 is provided with a transmission request output unit 70 other than above-described reception coil 31, the reception circuit 35, the reception control unit 40 and the load apparatus 45. As shown in Fig.7, the reception coil 31 together with the capacitor CC1 form a series resonant circuit. The AC current induced at the resonant circuit is rectified by a diode bridge circuit composed of four diodes RD1-RD4 which are provided in the reception circuit 35, and outputted to the load apparatus 45. The load of the load apparatus 45, for example, SOC indicating a state of charge is monitored by the reception control unit 40.

The transmission request output unit 70 of the reception apparatus 30 is provided with a sub coil 71 that forms magnetic coupling when the transmission coil approaches the reception coil 31, a resonant capacitor CC2, a solid state relay 74 operated by the reception control unit 40, and the like. In the drawing, only a contact point is shown for the solid state relay 74. The contact point of the solid state relay 74 is in an open state as a default state. In this state, current does not flow through the circuit of the transmission request output unit 70. In the case where the reception control unit 40 detects a state of the load apparatus 45 to determine that the power-reception is necessary, the reception control unit 40 outputs a transmission request signal RS to the transmission request output unit 70 to drive the solid state relay 74, thereby causing the contact point to be closed. Hence, the circuit of the transmission request output unit 70 becomes the closed circuit. The resonant frequency of the series resonant circuit composed of the sub coil 71 and the resonant capacitor CC2 is 85KHz. With this state, when the transmission coil 51 is present in the vicinity of the sub coil 71, due to the magnetic coupling between the transmission coil 51 and the sub coil 71, current flows through the closed circuit of the transmission request output unit 70. As a result, the current flowing through the transmission coil 51 increases. Since a magnitude of current flowing through the transmission coil 51 in the transmission apparatus 50 is detected by the detection unit 55, the transmission request detection unit 85 determines an increase in the standby current Is and outputs the start signal SS to the changing unit 53, whereby the impedance of the changing unit 53 is changed to a lower value to cause the resonant current Ir to flow. Then, the power transmission via the transmission coil 51 and the reception coil 31 is performed for a predetermined time Tt and thereafter, the power transmission is terminated.

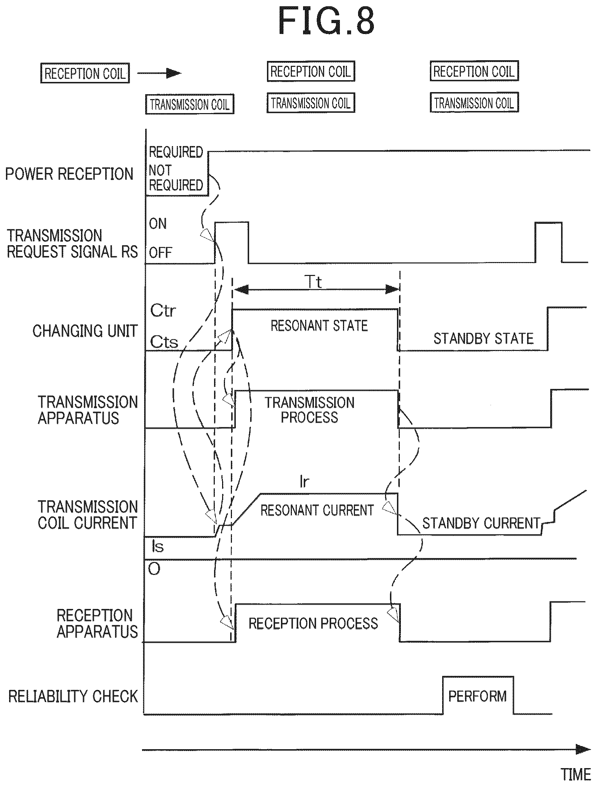

The above-described control is shown in Fig.8. As shown in Fig.8, when the reception apparatus 30 side turns the transmission request signal RS to be ON in a state where the transmission coil 51 and the reception coil 31 are magnetically coupled, the current Is flowing through the transmission coil 51 increases, then the transmission request detection unit 85 detects the increase in the current Is. As a result, the state of the changing unit is switched from the standby state in which the impedance is high to the resonant state in which the impedance is low, and the current Ir flowing through the transmission coil 51 rapidly increases. Consequently, the transmission apparatus 50 side is in a state of performing the power-transmission process (Fig.5, step S140) and the reception apparatus 30 side is in a state of performing the reception process (Fig.5, step S240).

The power-transmission process in the transmission apparatus 50 side is terminated regardless of the amount of current Ir after the time Tt elapses. As a result, the changing unit 53 of the transmission apparatus 50 is switched to a high-impedance state, the transmission circuit is caused to be in a standby state, and the current flowing through the transmission coil 51 is a standby current Is. This state is continued until the transmission request signal is outputted from the reception apparatus 30 side. In this period, the reception apparatus 30 and the transmission apparatus 50 may perform a reliability check process. Thereafter, when the reception apparatus 30 side outputs the transmission request taking the state of the load apparatus 45 and the like into consideration, the above-described operations and transmission/-reception processes are performed again.

According to the above-described transmission apparatus 50 and the reception apparatus 30, the transmission request signal RS is caused to be ON and after a predetermined time elapses, the transmission request signal RS is caused to be OFF. This is accomplished such that the reception control unit 40 determines a pulse width of the transmission request signal RS and turns the transmission request signal to be ON. Alternatively, the control may be accomplished in a manner that the reception control unit 40 once causes the transmission request signal RS to be ON, then the reception process is started, and after detecting start of the power-transmission with a power larger than or equal to a predetermined threshold, the transmission request signal RS may be caused to be OFF. According to such a control, there is an advantage that repetitive outputs of the transmission request signal RS are not necessary, in the case where the transmission request signal RS is outputted without detecting whether the reception coil 31 is positioned closely to the transmission coil 51 while the moving body 20 is moving.

According to the above-described contactless power supply system 100 of the present embodiment, the transmission apparatus 50 starts the power-transmission in response to a transmission request from the reception apparatus 30 side and the power transmission is terminated when a predetermined time Tt elapses. This is different from a case where the transmission apparatus 50 detects presence of the reception coil 31 based on a magnitude of current flowing through the transmission coil 51 to start the power transmission. Hence, even in a case where a magnitude of current flowing through the transmission coil 51 is larger than the required value determined in a design stage because of manufacturing tolerance and the like, and thus cannot detect a state where the reception coil 31 side has cancelled the magnetic coupling with the transmission coil 51, a case can be avoided that the transmission apparatus 50 attempts to maintain the power-transmission. Hence, current unnecessary for maintaining the power-transmission can be avoided. Also, a case in which power transmission continues to be performed while a power reception should not be continued because of any failures occurring in the reception apparatus 30 side can be avoided. This is because, when a predetermined time Tt elapses, the transmission apparatus 50 terminates the power transmission. Therefore, without communication other than exchange of the transmission request between the reception apparatus 30 and the transmission apparatus 50, unnecessary power transmission can be avoided. As a result, it can contribute to having low power consumption and can deal with failures in the reception apparatus 30 side. As a failure in the reception apparatus 30 side, various cases are assumed such as a case where a battery is provided and being overcharged, a case where an excessive temperature rise exceeding the rating of the reception apparatus 30 side is detected and the like.

According to the present embodiment, among the processes shown in Fig.5, performing the transmission apparatus detection process at step S220, an unnecessary transmission request is not outputted when the reception apparatus 30 is not closely positioned to the transmission apparatus 50. Further, in the case where a reliability check process (step S290) is performed after completing the reception process (step S240), the reliability of the apparatus can be determined in a period where the reception process is not performed. Hence, reliability of equipment for a power reception can readily be secured.

According to the above-described embodiments, since magnetic coupling with the transmission coil 51 is utilized to output the transmission request, a facility for a communication apparatus is not necessary and then, the configurations of the transmission apparatus 50 and the reception apparatus 30 can be simplified. Moreover, a power source is not necessarily provided for the transmission request output unit 70. Hence, the configurations can be further simplified.

B. Second Embodiment

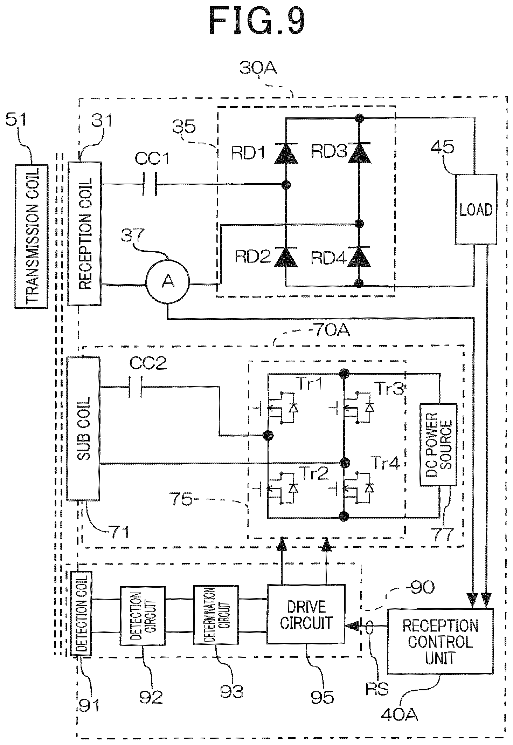

Next, a contactless power supply system 100 according to a second embodiment will be described. An overall configuration of the contactless power supply system 100 according to the second embodiment is similar to that of the first embodiment shown in Fig.1. According to the contactless power supply system 100 of the second embodiment, the transmission apparatus 50 is provided with a configuration similar to that of the first embodiment. Fig.9 shows a configuration of a reception apparatus 30A according to the second embodiment. As shown in Fig.9, a reception circuit of the reception apparatus 30A is configured similar to that of the first embodiment, and differs from the first embodiment in that a current sensor 37 that detects current value Ii of the current flowing through the reception circuit is provided, a transmission coil detection unit 90 is provided and a configuration of the transmission request output unit 70A is different from that of the first embodiment. According to the present embodiment, the reception control unit 40A reads a state of the load apparatus 45 and outputs a transmission request signal RS.

The transmission coil detection unit 90 provided in the reception apparatus 30A is provided in order to detect presence of the transmission coil 51. The transmission coil detection unit 90 is provided with a detection coil 91, a detection circuit 92, a determination circuit 93 and a drive circuit 95. The detection circuit detects a current flowing through the detection coil 91. The determination circuit 93 determines whether a transmission coil closely positioned to the detection coil 91 is present based on a magnitude of current detected by the detection circuit 92. The drive circuit 95 outputs a drive signal to an inverter 75 when receiving the transmission request signal RS from the reception control unit 40A for a predetermined period, in a state where the determination circuit 93 determines that the transmission coil 51 is closely positioned.

The transmission request output unit 70A in the reception apparatus 30A is provided with a resonant circuit composed of a sub coil 71 and a resonant capacitor CC2, and an inverter 75 disposed between this resonant circuit and a DC power source 77. The four switching transistors Tr1 to Tr4 of the inverter 75 constitute a bridge circuit in which an output signal from the drive circuit 95 (described later) is connected to the gate terminals of the switching transistors Tr1 to Tr4. For the four switching transistors Tr1 to Tr4, two diagonally disposed switching transistors Tr1 and Tr4, and Tr2 and Tr3 exclusively turn ON and OFF to apply AC voltage of which the frequency is 85KHz to the resonant circuit. At this moment, the sub coil 71, as long as the transmission coil 51 of the transmission apparatus 50 is present at a close position, magnetically couples with the transmission coil 51 to increase the current flowing through the transmission coil 51. This increased current serves as a transmission request to the transmission apparatus 50.

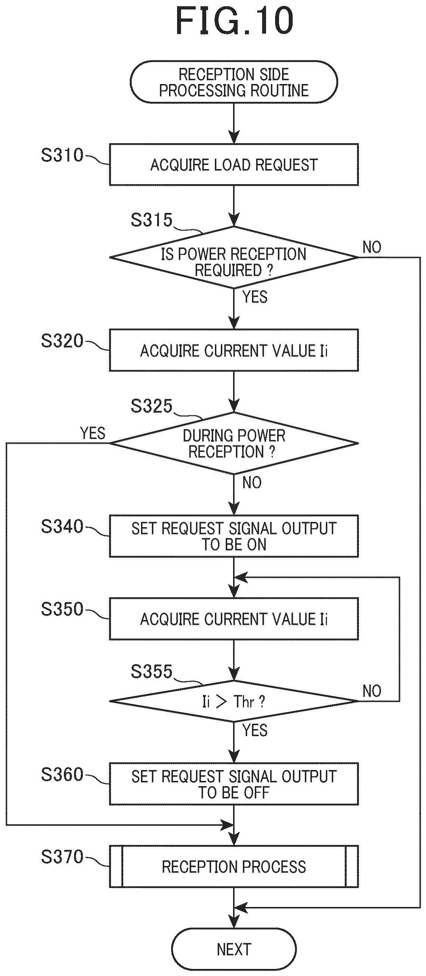

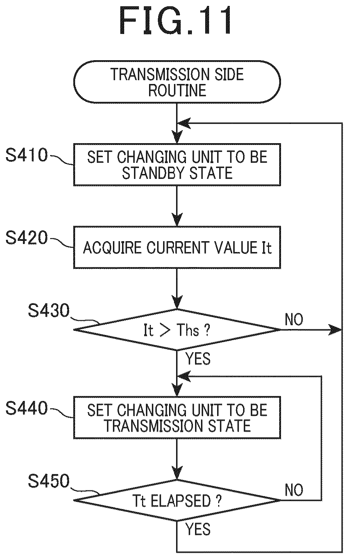

With reference to Fig.10, a reception side process executed by the reception control unit 40A of the reception apparatus 30 according to the second embodiment will be described. Also, with reference to Fig.11, a transmission side process executed by the transmission control unit 80 of the transmission apparatus 50 according to the second embodiment will be described. The reception control unit 40A repeatedly executes a processing routine shown in Fig.10 at predetermined intervals when the reception apparatus 30 is activated. Firstly, the reception control unit 40A acquires a load request of the load apparatus 45 (step S310) and determines whether power reception from the transmission apparatus 50 is necessary (step S315). When determining that power reception is necessary (step S315: YES), the control acquires (step S320) a current value Ii of the current flowing through the reception circuit from the current sensor 37, and determines, based on the current value Ii, whether power reception is being performed from the transmission apparatus 50 (step S325). When it is difficult to determine that power reception has been performed because the current value Ii is too small, the reception control unit 40A turns the state of the transmission request signal to be ON (step S340). Thereafter, the control reads the output of the current sensor 37, acquires the current value Ii of the current flowing through the reception circuit (step S350), determines whether the current value Ii is larger than a predetermined determination threshold Thr (step S355), and repeats these processes (steps S350 and S355) until a condition Ii>Thr is met.

In response to the above-described operations of the reception apparatus 30, the transmission apparatus 50 executes the following processes and determinations. The transmission apparatus 50, after the activation, as shown in Fig.11, changes the changing unit 53 to be at the standby state (step S410) in which the impedance of the transmission circuit is high and acquires the current value It of the current flowing through the transmission coil 51 (step S420). Further, the control determines whether the current value It is larger than or equal to the determination threshold Ths (S430), when the current value It is not larger than the determination threshold Ths, returns to the step S410 and repeats the above-described processes. In this period, when the reception control unit 40A of the reception apparatus 30A turns the transmission request signal RS to be ON, and the transmission request output unit 70A increases the standby current flowing through the transmission coil 5, the current value It exceeds the determination threshold Ths (step S430: YES).

In response to the determination, the transmission control unit 80 changes the impedance of the changing unit 53 to be small, thereby changing the state to be at the transmission state in which the resonant current Ir is capable of flowing (step S440). As a result, with magnetic coupling between the transmission coil 51 and the reception coil 31, power-transmission using the resonance is started and the current flowing through the transmission coil 51 and the reception coil 31 increase. The transmission control unit 80 of the transmission apparatus 50 repeatedly executes this process until the time Tt elapses (step S450). When the time Tt elapses, the transmission control unit 80 returns to step S410 and changes the impedance of the changing unit 53 to be high, thereby changing the state to be at the standby state.

In the case where the transmission coil 51 of the transmission apparatus 50 is closely positioned to the reception coil 31 at a time when the transmission request signal RS is outputted, as described above, since the drive circuit 95 of the transmission coil detection unit 90 drives the inverter 75 of the transmission request output unit 70A, the transmission control unit 80 of the transmission apparatus 50 detects a transmission request when the current value It of the current flowing through the transmission coil 51 exceeds the determination threshold Ths, changes the impedance of the changing unit 53, thereby changing the resonant frequency to be 85KHz. As a result, the impedance of the transmission circuit becomes small and the resonant current Ir flows. Then, the current value Ii detected by the current sensor 37 increases again.

Hence, when the reception control unit 40A of the reception apparatus 30A repeatedly executes steps S350 and S355, the current value Ii soon becomes larger than the determination threshold Thr (step S355: YES), and the reception control unit 40A turns the transmission request signal RS to be OFF (step S360). A case is considered that the reception side cannot approach the transmission apparatus 50 for some reason even when the mobile body 20 moves, and state continues that the current value Ii is lower than the determination threshold Thr. In this case, a period where a processing loop of the steps S350 to S355 may be measured, and when a time-out is determined, the transmission request signal RS may be controlled to be OFF to terminate the present routine.

After changing the transmission request signal RS to be OFF, the control performs a reception process (step S370) and temperately terminates the processing routine. Since the present routine is repeatedly executed at predetermined intervals, when determined that the power reception is necessary based on the load request, processes and determinations are performed in the order of steps S310, S315, S320, S325 and S370, and the reception process is continued. On the other hand, when determined that power reception is not necessary based on the load request (step S315: NO), the control does not perform any action, proceeds to 'NEXT' and terminates the present routine. According to the present embodiment, during the reception process, when the reception request disappears, the control does not perform any specific process. However, even in this case, when a predetermined period Tt elapses from a time when power transmission is started by the transmission apparatus 50 which received the transmission request, power transmission performed by the transmission apparatus is stopped. The configuration may be modified in which diodes constituting other arm of the reception circuit 35, for example, diodes RD1 and RD3 may be changed to switching elements and the switching elements may be caused to be OFF when determined that the reception request is not present based on the load request, thereby terminating the reception process.

According to the above-described contactless power supply system 100 of the second embodiment, similar effects and advantages can be obtained. Further, since the transmission coil detection unit 90 is provided in the reception apparatus 30, after determining that the transmission apparatus 50 is closely positioned, the power transmission request can be transmitted to the transmission apparatus 50 side. Moreover, after changing the transmission request signal RS to be ON, the reception control unit 40 i) determines activation of the power transmission from the transmission apparatus 50 to the reception apparatus 30A using the current value Ii of the current flowing through the reception coil 31, and ii) changes the transmission request signal RS to be OFF. Therefore, the transmission apparatus 50 side can be reliably notified of the transmission request.

C. Third Embodiment

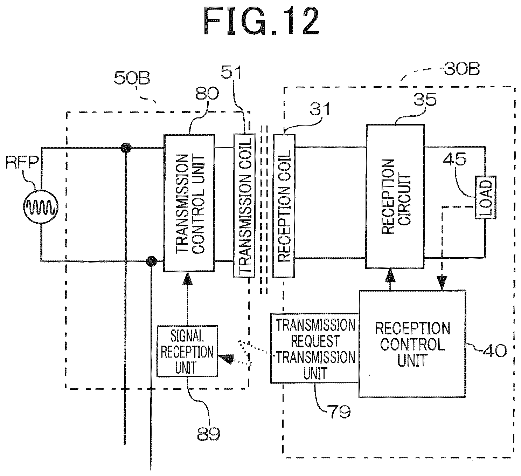

Next, a contactless power supply system 100 according to a third embodiment will be described. The contactless power supply system 100 according to the third embodiment, as shown in Fig.12, is provided with a transmission apparatus 50B and a reception apparatus 30B. The transmission apparatus 50B and the reception apparatus 30B are provided with the same configuration as those in the first embodiment. However, the third embodiment differs from the first embodiment in that magnetic coupling between the transmission coil 51 and the reception coil 31 is not utilized for transmitting a transmission request from the reception apparatus 30B to the transmission apparatus 50B, but a communication method is utilized for the transmission therebetween. For such a communication method, the reception apparatus 30B is provided with a transmission request transmission unit 79, and the transmission apparatus 50B is provided with a signal reception unit 89. The transmission request transmission unit 79 and the signal reception unit 89 communicate with Bluetooth (registered trade mark). The communication method is not limited this method, but other communication methods such as optical communication or WiFi may be utilized.

The transmission request transmission unit 79 outputs a signal requesting a power-transmission when receiving a transmission request signal outputted by the reception control unit 40. In the case where the transmission apparatus 50B is present in an output range of the signal requesting the power-transmission, the signal reception unit 89 of the transmission apparatus 50B receives this transmission request signal and notifies the transmission control unit 80 of the reception of this transmission request signal. The transmission control unit 80 lowers the impedance of the transmission circuit for a predetermined time Tt to utilize resonance between the transmission coil 51 and the reception coil 31, thereby performing power transmission. When the predetermined time Tt elapses, regardless of the resonant current, the transmission control unit 80 sets the impedance of the transmission circuit to be higher, and terminates the power transmission occurring with the resonance. In the case where the transmission request is present in the reception apparatus 30B, a signal requesting power-transmission is again transmitted to the transmission apparatus 50B side via the transmission request transmission unit 79, and when the reception unit 89 receives the signal requesting the power-transmission, the power-transmission is performed similarly to the above.

Even with the contactless power supply system 100 according to the third embodiment provided with the above-described configuration, effects and advantages similar to those in the first and second embodiment can be obtained in which the contactless power-transmission can be accomplished. Moreover, according to the third embodiment, since the transmission coil 51 and the reception coil 31 are not used for transmitting and receiving the transmission request, controlling the timing of transmitting and receiving the transmission request signal using the resonance is not required. Thus, a degree of designing both coils 51 and 31 can be expanded. Further, noise occurring between both coils can be prevented from being erroneously detected as a transmission request.

According to the above-described embodiments, in the case where the power-transmission is required for the reception apparatus 30 side, for example, a state where the SOC is being lowered, the transmission request is repeatedly outputted. However, in this case, intervals for capable of outputting the transmission request may be restricted. For example, the intervals may be set to be longer than the predetermined time Tt in which the transmission apparatus 50 continues to be in the power-transmission state so as to secure a period in which a power-transmission using the resonance is not performed, to be a predetermined period or longer. With this control, an increase in temperature caused by a power-transmission of both coils or the reception coil 31 can be mitigated. Further, a required time for performing a process of determining the reliability of respective apparatuses can readily be secured. In a view of temperature increase, the number of repeats for transmitting the transmission request may be restricted. For example, the reception apparatus 30 side may be configured such that once a transmission request is outputted from the reception apparatus 30 side for 10 times at a shorter predetermined interval, then the next transmission request is disabled for a period longer than the intervals in the prior transmission, or the transmission apparatus 50 does not accept the transmission request for a prescribed period even when the reception apparatus 30 outputs the transmission request.

D. Modification Examples

According to the above-described some embodiments, the time Tt from when the transmission request from the reception apparatus 30 side is accepted to when the transmission apparatus 50 side terminates the power-transmission is set to be a predetermined period. However, the time Tt may be changed depending on a condition of the power transmission. Hereinafter, such modification examples 1 to 3 will be described. According to respective modification examples, in the processing routine (Fig.11) of the transmission apparatus 50 side of the second embodiment, the time Tt is defined as follows.

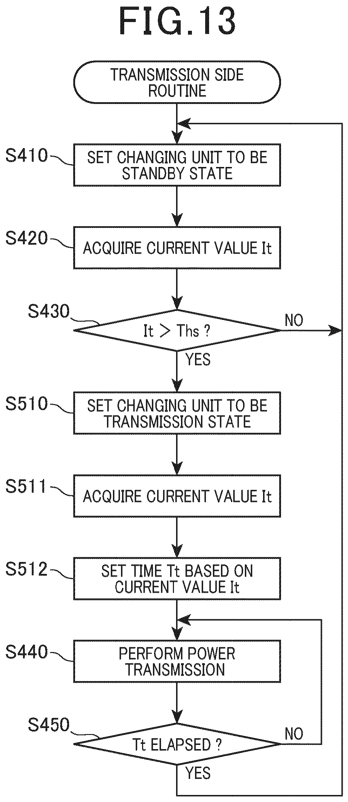

In the modification example 1, as shown in Fig.13, during steps S430 to S440, a process is executed for setting the time Tt required for the power transmission until its termination, based on the current value It of the current flowing through the transmission coil 51. Specifically, when a determination at step S430 is YES, firstly, the impedance of the changing unit 53 is lowered to cause a transmission state (step S510). Thereafter, the control acquires the current value It of the current flowing through the transmission coil 51 in the transmission state (step S511). Then, the control sets the predetermined time Tt extending till the power transmission is terminated (step S512) based on the current value It. With this setting process, the predetermined time Tt is determined depending on the current value It in a transmission state. Here, the larger the current value It of the current flowing through the transmission coil 51 during the transmission state, the longer the time Tt is set. However, the predetermined time Tt is necessarily set to be a finite number. A relationship between the current value It and the predetermined time Tt may be obtained using a mathematical equation or the relationship may be prepared in advance as a table-form and obtained referring to the table.

According to the modification example 1, in the case where the current value It of the current flowing through the transmission coil 51 during the transmission state is large, the time Tt is set to be longer and set to be shorter when the current value It is small. Hence, the predetermined time Tt can be set to be appropriate length. In other words, in the case where the power-transmission is started when the transmission coil 51 and the reception coil 31 face each other, the time Tt during which the power-transmission continues is set to be longer, whereby the average power to be supplied can be prevented from being lowered. On the other hand, in the case where the transmission coil 51 and the reception coil 31 are positioned relatively far from each other while capable of transmitting power therebetween, when the power-transmission starts, since the time Tt where the power-transmission continues is set to be shorter, a period in which magnetic flux continues to be emitted in a state where the reception coil 31 is positioned further from the transmission coil 51 can be set to be shorter.

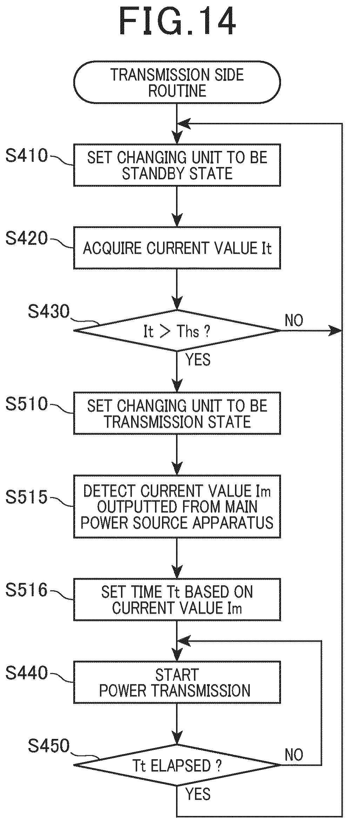

According to the modification example 2, as shown in Fig.14, processes for setting the time Tt extending till the power transmission is terminated, based on the output current value Im of the current supplied to the transmission apparatus 50 from the main power source apparatus 60, are executed from step S430 to step S440. Specifically, when a determination at step S430 is YES, firstly, the impedance of the changing unit 53 is lowered to cause a transmission state (step S510). Thereafter, the control acquires the current value Im of the current outputted from the main power source apparatus 60 to the transmission apparatus 50 in the transmission state (step S515). For the output current value Im, a detection value of the current sensor for an over-current detection provided in the inverter of the main power source apparatus 60 can be used instead. The control sets, based on this output current value Im, the predetermined time Tt extending till the power transmission is terminated (step S516). With this setting process, the predetermined time Tt is determined depending on the output current value Im in a transmission state. Here, the larger the current value Im outputted to the transmission apparatus 50 during the transmission state, the longer the time Tt is set. Note that setting of the time Tt to be a finite value and obtaining a relationship between the output current value Im and the predetermined time Tt using a mathematical equation or using a table are the same as those in the modification example 1.

According to the modification example 2, in the case where the output current value Im of the current outputted to the transmission apparatus 50 during the transmission state is large, the time Tt is set to be longer, and set to be shorter when the current value Im is small. Hence, the predetermined time Tt can be set to be appropriate length. Since a strong correlation is present between the output current value Im and the current value of the current flowing through the transmission coil 51, also with the modification example 2, the effects and advantages similar to the modification example 1, such as a suppression of lowering the average power to be supplied or a suppression of wasted emission of magnetic flux from the transmission coil 51 in a state where the reception coil 31 is positioned away, can be obtained.

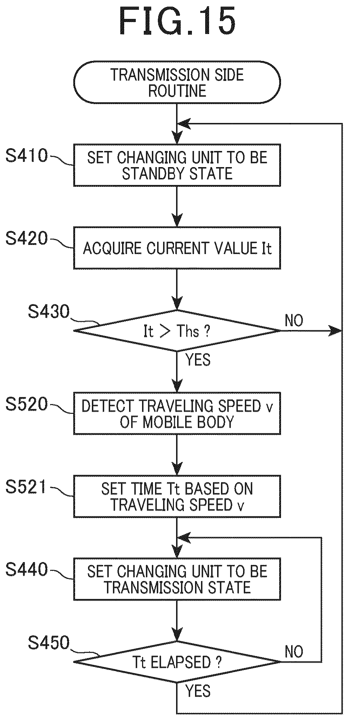

According to the modification example 3, as shown in Fig.15, processes for setting the time Tt extending till the power transmission is terminated, based on the traveling speed v of the mobile body 20, are executed from step S430 to step S440. Specifically, when the determination at step S430 is YES, the process firstly detects the traveling speed v of the mobile body 20 (step S520). Thereafter, the process sets the predetermined time Tt extending until the power-transmission is terminated (S521), based on the traveling speed v of the mobile body 20. With this setting process, the predetermined time Tt is determined depending on a period during which the reception coil 31 is assumed to face the transmission coil 51. Here, the longer a period during which the traveling speed v of the mobile body 20 is low and both coils are magnetically coupled, the longer the time Tt is set. Note that setting of the time Tt to be a finite value and obtaining a relationship between the traveling speed v and the predetermined time Tt using a mathematical equation or using a table are the same as those in the modification examples 1 and 2.

According to the modification example 3, since the time Tt extending till the power-transmission is terminated is set to be longer when the travelling speed is low, and is set to be shorter when the travelling speed is high, the predetermined time Tt can be an appropriate length. According to the modification example 3, in the case where the traveling speed v is low, since a period during which the transmission coil 51 faces the reception coil 31 or they are at a position capable of transmitting power, is assumed to be longer, the average power to be supplied can be prevented from being lowered. On the other hand, in the case where the traveling speed v is high, it is assumed that the transmission apparatus 50 and the reception coil 31 may become separated within a short period of time, and wasted emission of magnetic flux from the transmission coil 51 in a state where the reception coil 31 is positioned away can be suppressed.

E. Other Embodiments

(1) The present disclosure can be embodied in the following manners. A first aspect is a configuration of a contactless power supply system in which power transmission is performed from a transmission apparatus to a reception apparatus using magnetic coupling. According to the contactless power supply system, the reception apparatus outputs a transmission request signal that requests a power transmission operation, the transmission apparatus performs, when receiving the transmission request signal, a power transmission using the magnetic coupling to the reception apparatus for a predetermined transmission period, and then the transmission apparatus changes the state to be a standby state in which the power transmission quantity is smaller than that of the transmission period. Thus, the power transmission from the transmission apparatus is performed in response to a reception of the transmission request signal transmitted from the reception apparatus, and then the state is changed to be a standby state where the power transmission quantity is smaller than that of the transmission period, after a predetermined transmission period elapses. Accordingly, the power transmission from the transmission apparatus to the reception apparatus using the magnetic coupling can be prevented from being executed exceeding the transmission period, and the power transmission can be prevented or suppressed from being continuously performed with a large power transmission quantity in the case where continued power transmission is undesirable for some reason.

Here, the power transmission from the transmission apparatus to the reception apparatus may be performed in various manners as long as magnetic coupling is utilized, and a resonance may or may not be utilized. Further, a transmission quantity in the standby state may be smaller than that in the transmission period and the transmission may not be performed in the standby state. For a state in which the power-transmission is not desired to be continued, a state where the magnetic coupling is not sufficient or a state where it is undesirable for the reception apparatus side to continue the power reception are considered. For the latter case, since a storage battery such as a secondary battery or a capacitor is provided in the reception apparatus, which are charged with power received by the reception apparatus, a case where the storage battery cannot be charged any longer, or a case where any abnormality occurs in a circuit of the power reception, may be considered. Such an abnormality includes a case where overheating exceeding a predetermined temperature is detected, a case where an overcurrent exceeding a predetermined current value is detected, and a case where a diagnostic process in the reception side apparatus issues a power-reception stop command.

(2) In the above-described configuration (1), the transmission apparatus may be configured not to perform the power transmission using the magnetic coupling in the standby state. Thus, since the power transmission is stopped, failures due to the power transmission can be further suppressed. Note that failures due to the power transmission include undesirable temperature increase in the power reception apparatus side, undesirable overcharging or wasted power consumption in the transmission apparatus side.

(3) In the above-described configurations (1) or (2), the reception apparatus may output the transmission request signal to the transmission apparatus using the magnetic coupling. Thus, since the transmission request signal can be transmitted using the magnetic coupling, at least a part of configuration for outputting the transmission request signal can be simplified. The transmission request signal using the magnetic coupling can be outputted by changing a magnitude of current that flows due to the magnetic coupling. A change in the magnitude of the current can be determined by detecting the current value, but it is not limited to detection of the current value. Specifically, any portion where the current flows may be detected, for example, a voltage produced at the transmission coil, when a resonant circuit is formed, voltage across the capacitor that forms the resonant circuit, a change in the magnitude of the current flowing through the capacitor forming the resonant circuit may be detected, thereby determining the transmission request signal. Alternatively, the transmission request signal may be determined by detecting a change in the magnetic flux produced by the current flowing.

(4) In the above-described configurations (1) to (3), the transmission apparatus may be configured to include a primary resonant circuit composed of a transmission coil and a first capacitor and an AC power source apparatus that applies AC voltage having a predetermined frequency to the primary resonant circuit to supply power to the primary resonant circuit, the reception apparatus may be configured to include a secondary resonant circuit composed of a reception coil and a second capacitor and a rectifier circuit that rectifies AC current induced at the secondary resonant circuit to be a DC current, and the transmission coil and the reception coil may form magnetic coupling. With these configurations, an efficient contactless power supply can be embodied with a simple configuration. For the primary resonant circuit and the secondary resonant circuit, any one of various configurations known as a series-resonant circuit composed of a coil and a capacitor may be employed or any one of various configurations known as a parallel resonant circuit may be employed.

(5) In the above-described configuration (4), the reception apparatus may be provided with a signal output unit that outputs the transmission request signal via the reception coil and the transmission coil which are magnetically coupled, and the transmission apparatus may be provided with a transmission request detection unit that detects the transmission request signal using a change in an electric quantity at the transmission coil. According to this configuration, with a simple configuration, a transmission request signal can be outputted to the transmission apparatus from the reception apparatus. A change in the electric quantity can be detected with a change in the quantity of the current flowing through the transmission coil or a change in the voltage of the transmission coil.

(6) In the above-described configurations (4) or (5), the transmission apparatus may be provided with a changing unit between the transmission coil and the AC power source apparatus for changing the transmission quantity. Thus, an amount of power capable of being transmitted in the transmission period and an amount of power capable of being transmitted in the standby state can readily be switched. Note that changing the transmission quantity can be embodied by switching a contact point for changing the connection of the power transmission circuit to be ON and OFF or switching the magnitude of the impedance of the circuit. The switching may be accomplished as a switching of a state from ON to OFF or from OFF to ON or may be accomplished by changing a ratio between ON period and OFF period, that is, changing the duty of ON and OFF period.

(7) In the above-described configurations (4) to (6), the changing unit may be provided with a changing circuit that changes the capacitance of the first capacitor to be a second value from a first value, and the resonant frequency of the primary resonant circuit, when the capacitance of the first capacitor is the second value, may be set to be farther from the predetermined frequency of the AC voltage than a case where the capacitance of the first capacitor is the first value. Thus, the resonant frequency of the primary resonant circuit can readily be changed to be close to or away from the frequency of the AC voltage, thereby changing a degree of power-transmission using the resonant frequency. For changing the capacitance of the capacitor, it can readily be accomplished by switching between a plurality of capacitors or switching between a parallel connection and a series connection. The resonant frequency of the primary resonant circuit in the transmission period may be set to be the same as the frequency of the AC voltage to improve the transmission efficiency. However, the resonant frequency may not be completely the same as the frequency of the AC voltage and may be set to be close to the frequency of the AC voltage compared to that in the standby state. Moreover, without changing the capacitance of the capacitor, the frequency of the primary resonant circuit may be changed by changing the inductance of the transmission coil. The inductance can readily be changed by disposing taps in the transmission coil and switching taps to change the number of windings. Furthermore, the transmission coil provided with a core may be utilized such that a portion overlapping between the core and the winding is adjusted to change a permeability thereof, thereby changing the resonant frequency.

(8) In the above-described configurations (1) to (7), the transmission apparatus may be provided with a parameter detection unit that detects parameters to which the transmission quantity in the transmission period is reflected, and the transmission period may be set depending on the parameter. Thus, with the parameter to which the transmission quantity is reflected, the transmission period can be set, whereby the average power to be supplied can be prevented from being lowered, and a suppression of wasted emission of magnetic flux can be accomplished. As a parameter, a transmission quantity when the transmission period starts, the current value of current flowing through the transmission coil, an amount of power of a power source circuit that supplies power to the transmission apparatus may be utilized.

(9) In the above-described configurations (1) to (8), the reception apparatus may repeatedly output, when a predetermined condition is satisfied, the transmission request signal at predetermined intervals. Thus, in the case where the power supply operation can be performed, even when an interruption period is present, a contactless power supply operation can be continued. The predetermined condition that allows the contactless power supply operation to be performed with an interruption period, is that the reception side requires a power-transmission and there is no obstruction to receiving power.

(10) In the above-described configuration (9), the reception apparatus may determine, when an abnormality has occurred in the reception apparatus, that the predetermined condition is not satisfied.

Thus, a power transmission can be prevented from being performed, regardless of the abnormality present in the reception apparatus.

(11) In the above-described configurations (1) to (10), for at least either the reception apparatus or the transmission apparatus, a safety check thereof may be performed after the transmission period is ended until the reception apparatus outputs the next transmission request signal. Thus, safety of the apparatus and a continuation of the power supply operation can be secured.

(12) In the above-described configurations (1) to (11), the reception apparatus is mounted on a mobile body which moves relative to the transmission apparatus, and the length of the transmission period may be determined in advance depending on an average time during which the reception apparatus receives power transmitted from the transmission apparatus while the mobile body is moving. Thus, with an average time required for mobile body to pass the transmission apparatus, the power transmission quantity capable of being transmitted is acquired to perform a power-transmission. Therefore, the average power to be supplied can be prevented from being lowered, and a suppression of wasted emission of magnetic flux can be accomplished.

(13) Other aspect of the present disclosure is a contactless transmission apparatus that performs a power-transmission to the reception apparatus using magnetic coupling. The contactless transmission apparatus performs, when receiving the transmission request signal from the reception apparatus, a first transmission using the magnetic coupling to the reception apparatus in the predetermined transmission period, and after the transmission period is ended, the contactless transmission apparatus changes the state to be a transmission state of which the power-transmission quantity is lower than that of the first transmission. Thus, state of the contactless transmission apparatus becomes a transmission state of which the power-transmission quantity is lower than that of the first transmission after the transmission period is ended, thereby preventing undesirable transmission having relatively high transmission quantity from being continuously performed.

(14) Other aspect of the present disclosure is a contactless reception apparatus that receives power transmitted from the transmission apparatus. The contactless reception apparatus outputs a transmission request signal that requests a power-transmission to the transmission apparatus, and the transmission apparatus which receives the transmission request signal performs a first transmission to the reception apparatus using the magnetic coupling in the predetermined transmission period. Then, after the transmission period ends, the state is changed to be a transmission state of which the transmission quantity is lower than that of the first transmission, and the transmission request signal is again outputted when a predetermined condition is satisfied. Thus, as long as the contactless reception apparatus does not output the transmission request signal, since the transmission period ends within a predetermined period, the contactless reception apparatus does not aimlessly continue the power-reception, and if the power reception is necessary, the contactless reception apparatus is able to continue the power reception even when an interruption period is present.

(15) Other aspect of the present disclosure is a contactless power supply method that supplies power to a reception apparatus from a transmission apparatus. According to the contactless power supply method, the reception apparatus outputs a transmission request signal that requests a power-transmission, the transmission apparatus, when receiving the transmission request signal, performs a power-transmission to the reception apparatus using the magnetic coupling for a predetermined transmission period. After the transmission period ends, the transmission apparatus changes the state to be a transmission state of which the transmission quantity is lower than that in the transmission period. Thus, the power transmission from the transmission apparatus is performed when receiving the transmission request signal from the reception apparatus, and after the predetermined transmission period elapses, the state is changed to be the standby state where the transmission quantity is lower than that in the transmission period. Accordingly, the power transmission from the transmission apparatus to the reception apparatus using the magnetic coupling can be prevented from being executed exceeding the transmission period, and the power transmission can be prevented or suppressed from being continuously executed with a large power transmission quantity in the case where the power transmission is undesirable to be continued for some reason.

The control unit and method thereof disclosed in the present disclosure may be accomplished by a dedicated computer constituted of a processor and a memory programmed to execute one or more functions embodied by computer programs. Alternatively, the control unit and method thereof disclosed in the present disclosure may be accomplished by a dedicated computer provided by a processor configured of one or more dedicated hardware logic circuits. Further, the control unit and method thereof disclosed in the present disclosure may be accomplished by one or more dedicated computer where a processor and a memory programmed to execute one or more functions, and a processor configured of one or more hardware logic circuits are combined. Furthermore, the computer programs may be stored, as instruction codes executed by the computer, into a computer readable non-transitory tangible recording media. Note that 'computer readable non-transitory tangible recording media' is not limited to a portable recording media such as a flexible disk or a CD-ROM, but may include various storage units such as RAMs or ROMs disposed inside the computer or an external storage unit such as a hard disk drive unit fixed to the computer. In other words, 'computer readable non-transitory tangible recording media' may be broadly interpreted as any recoding media not only temporarily storing data packets but permanently storing data packets.

The present disclosure is not limited to the above-described embodiments and various configurations may be utilized without departing from the spirit of the present disclosure. For example, technical features in the embodiments corresponding to technical features in examples described in the summary section, may be appropriately replaced or combined in order to solve a part or all of issues in the above-described problems to be solved, or in order to accomplish a part or all of the above-described effects and advantages. Further, unless the above-described technical features are described as necessary in the present specification, the technical features may be appropriately omitted.

**Claims**

1. A contactless power supply system supplying power to a reception side from a transmission side using magnetic coupling, comprising:

   a reception apparatus (30, 30A, 30B) of the reception side configured to output a transmission request signal that requests power transmission;
   a transmission apparatus (50, 50B) of the transmission side configured to, when receiving the transmission request signal, perform power transmission using the magnetic coupling to the reception apparatus for a predetermined transmission period (Tt), and thereafter change a state thereof to be a standby state wherein a power transmission quantity is smaller than that of the transmission period.

2. The contactless power supply system according to claim 1, wherein
   the transmission apparatus is configured not to perform, during the standby state, a power transmission using the magnetic coupling.

3. The contactless power supply system according to claim 1, wherein
   the reception apparatus is configured to output the transmission request signal to the transmission apparatus using the magnetic coupling.

4. The contactless power supply system according to claim 1, wherein
   the transmission apparatus comprises:

   a primary resonant circuit composed of a transmission coil (51) and a first capacitor (Cs, Cr); and
   an AC power source (60) that applies an AC voltage having a predetermined frequency to the primary resonant circuit, thereby being supplied with power,
   the reception apparatus comprises:

   a secondary resonant circuit composed of a reception coil (31) and a second capacitor (CC1); and
   a rectifier circuit (35) that rectifies an AC current induced at the secondary resonant circuit to be a DC current,
   wherein
   the transmission coil and the reception coil form the magnetic coupling.

5. The contactless power supply system according to claim 4, wherein

   the reception apparatus includes a signal output unit (70) that outputs the transmission request signal via the reception coil and the transmission coil which are magnetically coupled; and
   the transmission apparatus includes a transmission request detection unit (85) that detects the transmission request signal using a change in an electric quantity at the transmission coil.

6. The contactless power supply system according to claim 4, wherein
   the transmission apparatus includes a changing unit (80) disposed between the transmission coil and the AC power source, the changing unit changing the transmission quantity.

7. The contactless power supply system according to claim 6, wherein

   the changing unit includes a changing circuit (53) that changes a capacitance of the first capacitor to be a second value from a first value; and
   a resonant frequency of the primary resonant circuit when the capacitance of the first capacitor is the second value, is farther from the predetermined frequency of the AC voltage than a case where the capacitance of the first capacitor is the first value.

8. The contactless power supply system according to claim 1, wherein

the transmission apparatus includes a parameter detection unit (55) that detects parameters which depends on the transmission quantity in the transmission period; and
the transmission period is set depending on the parameters.

9. The contactless power supply system according to claim 1, wherein
the reception apparatus is configured to repeatedly output the transmission request signal at predetermined intervals when a predetermined condition is satisfied

10. The contactless power supply system according to claim 9, wherein
the reception apparatus is configured to determine, when an abnormality has occurred in the reception apparatus, that the predetermined condition is not satisfied.

11. The contactless power supply system according to claim 1, wherein
at least either the reception apparatus or the transmission apparatus performs a safety check for the apparatus thereof after the transmission period is ended until the reception apparatus outputs a next transmission request signal.

12. The contactless power supply system according to claim 1, wherein

the reception apparatus is mounted on a mobile body (20) which moves relative to the transmission apparatus; and
a length of the transmission period is determined in advance depending on an average time during which the reception apparatus receives power transmitted from the transmission apparatus while the mobile body is moving.

13. A contactless power transmission apparatus that performs power transmission to a reception apparatus using magnetic coupling,
wherein

the contactless power transmission apparatus, when receiving a transmission request signal from the reception apparatus, performs a first transmission to the reception apparatus using the magnetic coupling in a predetermined transmission period; and
the contactless power transmission apparatus changes, after the transmission period ends, a state to be a transmission state of which a power-transmission quantity is lower than that of the first transmission.

14. A contactless power reception apparatus that receives power transmitted from a transmission apparatus using magnetic coupling, wherein

the contactless power reception apparatus transmits a transmission request signal that requests a power transmission to the transmission apparatus;
the transmission apparatus which receives the transmission request signal performs a first transmission to the contactless power reception apparatus using the magnetic coupling in the predetermined transmission period; and
after the transmission period ends, a state is changed to be a transmission state of which a transmission quantity is lower than that of the first transmission, and the transmission request signal is again outputted when a predetermined condition is satisfied.

15. A method for performing contactless power supply from a transmission apparatus to a reception apparatus using magnetic coupling, comprising steps of:

outputting, by the reception apparatus, a transmission request signal that requests a power transmission;
performing, by the transmission apparatus when receiving the transmission request signal, a power transmission to the reception apparatus using the magnetic coupling for a predetermined transmission period; and
changing, by the transmission apparatus after the transmission period ends, a state to be a transmission state of which a transmission quantity is lower than that in the transmission period.

# FIG.1

# FIG.2

# FIG.3

# FIG.4

(A)

RECEPTION COIL ⟶ RECEPTION COIL

COIL CURRENT

Th1

Ir

Th2

Is

POSITION

TRANSMISSION COIL

(B)

RECEPTION COIL

COIL CURRENT

Ir

Is

POSITION

TRANSMISSION COIL

EP 4 679 676 A1

# FIG.5

**Transmission Side**

TRANSMISSION SIDE PROCESS

SET STANDBY STATE — S110

IS TRANSMISSION REQUEST PRESENT ? — S130
NO / YES

SET LOW IMPEDANCE STATE AND PERFORM TRANSMISSION PROCESS — S140

Tt ELAPSED ? — S160
NO / YES

TERMINATE TRANSMISSION STATE AND SET STANDBY STATE — S170

RELIABILITY CHECK — S190

RTN

**Reception Side**

RECEPTION SIDE PROCESS

IS POWER RECEPTION REQUIRED ? — S210
NO / YES

TRANSMISSION APPARATUS DETECTION PROCESS — S220

OUTPUT TRANSMISSION REQUEST — S230

RECEPTION PROCESS — S240

RELIABILITY CHECK — S290

RTN

21

# FIG.6

# FIG.7

# FIG.8

# FIG.9

# FIG.10

```
        ┌─────────────────────────┐
        │   RECEPTION SIDE        │
        │  PROCESSING ROUTINE     │
        └─────────────────────────┘
                    │
                    ▼
S310 ─── ┌─────────────────────────┐
         │  ACQUIRE LOAD REQUEST   │
         └─────────────────────────┘
                    │
                    ▼
S315 ──          ◇─────────────◇          NO
              IS POWER RECEPTION ─────────┐
                  REQUIRED ?               │
                    │ YES                  │
                    ▼                      │
S320 ─── ┌─────────────────────────┐      │
         │  ACQUIRE CURRENT VALUE Ii│     │
         └─────────────────────────┘      │
                    │                      │
                    ▼                      │
S325 ──  YES    ◇─────────────◇            │
         ┌──── DURING POWER               │
         │      RECEPTION ?               │
         │            │ NO                 │
         │            ▼                    │
S340 ─── │  ┌─────────────────────────┐   │
         │  │ SET REQUEST SIGNAL OUTPUT│  │
         │  │        TO BE ON          │  │
         │  └─────────────────────────┘   │
         │            │                    │
         │            ▼◄──────────┐        │
S350 ─── │  ┌─────────────────────────┐│  │
         │  │ ACQUIRE CURRENT VALUE Ii ││ │
         │  └─────────────────────────┘│  │
         │            │                 │  │
         │            ▼                 │  │
S355 ──  │        ◇─────────◇    NO     │  │
         │         Ii > Thr ? ──────────┘  │
         │            │ YES                 │
         │            ▼                     │
S360 ─── │  ┌─────────────────────────┐    │
         │  │ SET REQUEST SIGNAL OUTPUT│   │
         │  │       TO BE OFF          │   │
         │  └─────────────────────────┘    │
         │            │                     │
         └────────────▼                     │
S370 ─── ┌─────────────────────────┐        │
         │    RECEPTION PROCESS    │        │
         └─────────────────────────┘        │
                    │                        │
                    ▼◄──────────────────────┘
              ┌───────────┐
              │   NEXT    │
              └───────────┘
```

# FIG.11

```
        ┌──────────────────────────┐
        │   TRANSMISSION SIDE      │
        │       ROUTINE            │
        └──────────────────────────┘
                    │
                    ▼
S410    ┌──────────────────────────┐
        │ SET CHANGING UNIT TO BE  │
        │      STANDBY STATE       │
        └──────────────────────────┘
                    │
                    ▼
S420    ┌──────────────────────────┐
        │  ACQUIRE CURRENT VALUE It │
        └──────────────────────────┘
                    │
                    ▼
S430          < It > Ths ? >───── NO ──►
                    │ YES
                    ▼
S440    ┌──────────────────────────┐
        │ SET CHANGING UNIT TO BE  │
        │    TRANSMISSION STATE    │
        └──────────────────────────┘
                    │
                    ▼
S450        < Tt ELAPSED ? >───── NO ──►
                    │ YES
```

# FIG.12

# FIG.13

```
        ┌─────────────────────────┐
        │   TRANSMISSION SIDE      │
        │      ROUTINE             │
        └─────────────────────────┘
                     │
                     ▼ ◄─────────────────────┐
S410 ─┐ ┌─────────────────────────┐          │
      └─│ SET CHANGING UNIT TO BE │          │
        │      STANDBY STATE      │          │
        └─────────────────────────┘          │
                     │                        │
                     ▼                        │
S420 ─┐ ┌─────────────────────────┐          │
      └─│ ACQUIRE CURRENT VALUE It │          │
        └─────────────────────────┘          │
                     │                        │
                     ▼                        │
S430 ─┐      ╱──────────────╲      NO         │
      └──── <   It > Ths ?    >──────────────►│
             ╲──────────────╱                 │
                     │ YES                     │
                     ▼                         │
S510 ─┐ ┌─────────────────────────┐           │
      └─│ SET CHANGING UNIT TO BE │           │
        │    TRANSMISSION STATE   │           │
        └─────────────────────────┘           │
                     │                         │
                     ▼                         │
S511 ─┐ ┌─────────────────────────┐           │
      └─│ ACQUIRE CURRENT VALUE It │           │
        └─────────────────────────┘           │
                     │                         │
                     ▼                         │
S512 ─┐ ┌─────────────────────────┐           │
      └─│ SET TIME Tt BASED ON    │           │
        │    CURRENT VALUE It     │           │
        └─────────────────────────┘           │
                     │                         │
                     ▼ ◄────────────┐          │
S440 ─┐ ┌─────────────────────────┐ │          │
      └─│    PERFORM POWER        │ │          │
        │     TRANSMISSION        │ │          │
        └─────────────────────────┘ │          │
                     │               │          │
                     ▼               │          │
S450 ─┐      ╱──────────────╲    NO  │          │
      └──── <   Tt ELAPSED ?  >──────┘          │
             ╲──────────────╱                   │
                     │ YES                        │
                     └───────────────────────────┘
```

# FIG.14

```
        ╭─────────────────────╮
        │  TRANSMISSION SIDE  │
        │      ROUTINE        │
        ╰─────────────────────╯
                  │
                  ▼ ◄──────────────────────┐
S410 ─┐  ┌─────────────────────┐          │
      └─ │ SET CHANGING UNIT TO BE │      │
         │     STANDBY STATE    │         │
         └─────────────────────┘          │
                  │                        │
                  ▼                        │
S420 ─┐  ┌─────────────────────┐          │
      └─ │ ACQUIRE CURRENT VALUE It │     │
         └─────────────────────┘          │
                  │                        │
                  ▼                        │
S430 ─┐        ◇─────────◇      NO         │
      └───────< It > Ths ? >──────────────┤
               ◇─────────◇                 │
                  │ YES                     │
                  ▼                        │
S510 ─┐  ┌─────────────────────┐          │
      └─ │ SET CHANGING UNIT TO BE │      │
         │  TRANSMISSION STATE │          │
         └─────────────────────┘          │
                  │                        │
                  ▼                        │
S515 ─┐  ┌─────────────────────┐          │
      └─ │ DETECT CURRENT VALUE Im │      │
         │  OUTPUTTED FROM MAIN │         │
         │ POWER SOURCE APPARATUS │       │
         └─────────────────────┘          │
                  │                        │
                  ▼                        │
S516 ─┐  ┌─────────────────────┐          │
      └─ │   SET TIME Tt BASED ON │       │
         │   CURRENT VALUE Im  │          │
         └─────────────────────┘          │
                  │ ◄──────────┐           │
                  ▼            │           │
S440 ─┐  ┌─────────────────────┐          │
      └─ │       START         │          │
         │  POWER TRANSMISSION │          │
         └─────────────────────┘          │
                  │            │           │
                  ▼            │           │
S450 ─┐        ◇─────────◇  NO │           │
      └───────< Tt ELAPSED ? >─┘           │
               ◇─────────◇                 │
                  │ YES                     │
                  └─────────────────────────┘
```

# FIG.15

```
        ┌─────────────────────────┐
        │   TRANSMISSION SIDE     │
        │       ROUTINE           │
        └─────────────────────────┘
                    │
                    ▼
S410 ──┌─────────────────────────┐
       │ SET CHANGING UNIT TO BE │
       │      STANDBY STATE      │
       └─────────────────────────┘
                    │
                    ▼
S420 ──┌─────────────────────────┐
       │  ACQUIRE CURRENT VALUE It│
       └─────────────────────────┘
                    │
                    ▼
S430 ──◇─────────────────────────◇── NO ──►
          It > Ths ?
                    │ YES
                    ▼
S520 ──┌─────────────────────────┐
       │ DETECT TRAVELING SPEED v│
       │      OF MOBILE BODY     │
       └─────────────────────────┘
                    │
                    ▼
S521 ──┌─────────────────────────┐
       │    SET TIME Tt BASED ON  │
       │     TRAVELING SPEED v    │
       └─────────────────────────┘
                    │
                    ▼
S440 ──┌─────────────────────────┐
       │ SET CHANGING UNIT TO BE │
       │    TRANSMISSION STATE   │
       └─────────────────────────┘
                    │
                    ▼
S450 ──◇─────────────────────────◇── NO
          Tt ELAPSED ?
                    │ YES
```

31

# EP 4 679 676 A1

## INTERNATIONAL SEARCH REPORT

| International application No. |
|---|
| **PCT/JP2024/006203** |

### A. CLASSIFICATION OF SUBJECT MATTER

*H02J 50/80*(2016.01)i; *B60L 5/00*(2006.01)i; *B60L 53/122*(2019.01)i; *B60L 53/126*(2019.01)i; *B60M 7/00*(2006.01)i; *H02J 50/12*(2016.01)i; *H02J 50/40*(2016.01)i
FI: H02J50/80; B60L5/00 B; B60L53/122; B60L53/126; B60M7/00 X; H02J50/12; H02J50/40

According to International Patent Classification (IPC) or to both national classification and IPC

### B. FIELDS SEARCHED

Minimum documentation searched (classification system followed by classification symbols)
H02J50/80; B60L5/00; B60L53/122; B60L53/126; B60M7/00; H02J50/12; H02J50/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2022-127588 A (DENSO CORPORATION) 31 August 2022 (2022-08-31) paragraphs [0010]-[0015], [0021]-[0022], [0033]-[0034], [0048]-[0054], [0056], [0099], fig. 1-3, 7-8 | 1-15 |
| Y | JP 2019-057990 A (TOYOTA JIDOSHA KABUSHIKI KAISHA) 11 April 2019 (2019-04-11) paragraph [0019], fig. 4 | 1-15 |
| Y | JP 2023-000412 A (TOYOTA JIDOSHA KABUSHIKI KAISHA) 04 January 2023 (2023-01-04) paragraphs [0076], [0082] | 1-15 |
| Y | JP 2023-000390 A (TOYOTA JIDOSHA KABUSHIKI KAISHA) 04 January 2023 (2023-01-04) paragraphs [0128]-[0130] | 11 |

☐ Further documents are listed in the continuation of Box C.   ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **25 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

| Patent document cited in search report | Publication date (day/month/year) | Patent family member(s) | Publication date (day/month/year) |
|---|---|---|---|
| JP 2022-127588 A | 31 August 2022 | US 2023/0396100 A1<br>paragraphs [0034]-[0040], [0045]-[0046], [0057]-[0058], [0072]-[0078], [0080], [0123], fig. 1-3, 7-8<br>EP 4297240 A1<br>CN 116848752 A | |
| JP 2019-057990 A | 11 April 2019 | US 2019/0084434 A1<br>paragraph [0040], fig. 4<br>EP 3482996 A1<br>CN 109546697 A<br>KR 10-2019-0033001 A | |
| JP 2023-000412 A | 04 January 2023 | US 2022/0402394 A1<br>paragraphs [0089], [0095]<br>EP 4105066 A1<br>CN 115489344 A<br>KR 10-2022-0168968 A | |
| JP 2023-000390 A | 04 January 2023 | US 2022/0402392 A1<br>paragraphs [0151]-[0154]<br>EP 4106136 A1<br>CN 115489347 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023033500 A

- WO 2020183819 A